**Europäisches Patentamt**

**European Patent Office**

**Office européen des brevets**

(19)

(11) **EP 1 480 401 A2**

(12) **EUROPEAN PATENT APPLICATION**

(43) Date of publication:
**24.11.2004 Bulletin 2004/48**

(51) Int Cl.$^7$: **H04L 27/26**

(21) Application number: **04250579.2**

(22) Date of filing: **04.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.05.2003 KR 2003032004**

(71) Applicant: **Samsung Electronics Co., Ltd.**
**Suwon-si, Gyeonggi-Do 442-742 (KR)**

(72) Inventors:
- **Hong, Dae-sik**
  **Seodaemun-gu Seoul (KR)**
- **Choi, Young-ho**
  **Paldal-gu Suwon-city Gyunggi-do (KR)**

(74) Representative: **Geary, Stuart Lloyd et al**
**Venner Shipley LLP**
**20 Little Britain**
**London EC1A 7DH (GB)**

(54) **Frequency-offset estimator for multi-carrier reception**

(57)     An integer frequency offset estimator comprises a plurality of correlators for obtaining correlation values between a scattered pilot of a received OFDM symbol in the frequency domain and a plurality of classes of scattered pilots of a reference signal. A first selector determines the class of a scattered pilot class that provides the largest of the correlation values obtained at the correlators. A second selector estimates an integer frequency offset based on the largest correlation value and the class of the scattered pilot as determined by the first selector. In this manner, the integer frequency offset is estimated using one OFDM symbol and is resistant to symbol timing offsets and fractional frequency offsets.

# FIG. 6

EP 1 480 401 A2

**Description**

The present invention relates to an integer frequency offset estimator comprising correlation means configured to obtain a correlation value between one received symbol and a reference signal and estimating means for determining an integer frequency offset using said correlation value.

A number of European countries have adopted the terrestrial Digital Video Broadcast (DVB-T) standard, using Orthogonal Frequency Division Multiplexing (OFDM) for digital modulation. This combination provides improvements in both transmission speed with respect to bandwidth and resistance to interference.

However, conventional DVB-T receivers require a relatively long acquisition time on changing channel when compared with receivers for analogue broadcast signals (NTSC, PAL, SECAM). This is mainly due to the following reasons.

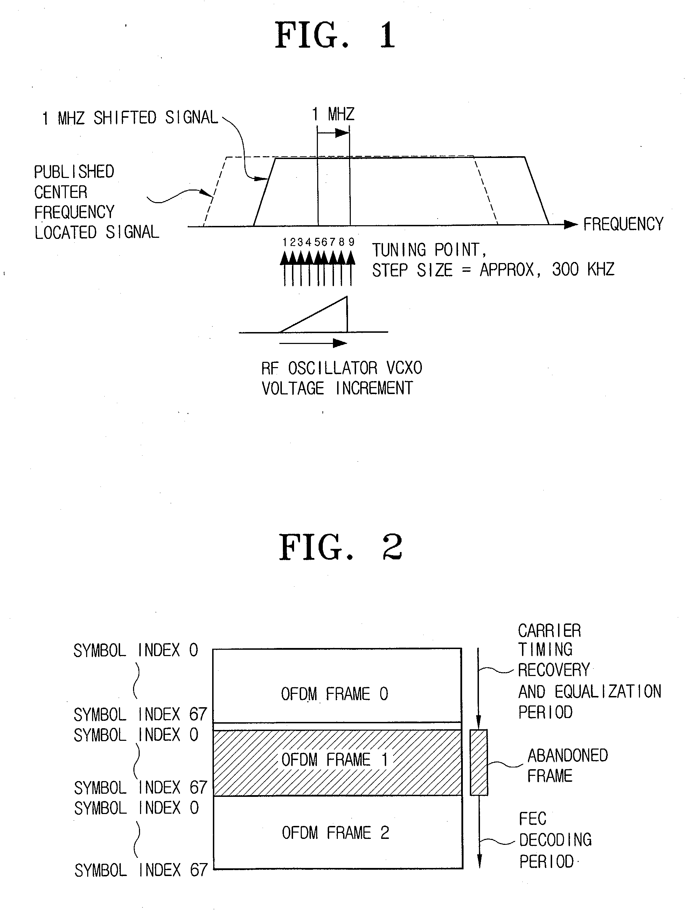

Firstly, a transmitter side transmits an OFDM signal which has an intended frequency offset, about 0-1MHz, in order to reduce interference caused by the present coexistence of analogue and digital broadcast signals. A receiving side checks for the presence of an OFDM signal through an AFT (Auto Fine Tuning) process. Figure 1 is a diagram showing a check for the existence of an OFDM signal performed in an AFT process using a Voltage Controlled Oscillator (VCO) in a demodulator having locking range $\pm300$KHz for frequency offsets. In this example, the VCO is retuned nine times in order to check the OFDM signal in a received signal with a 1MHz frequency offset. This results in a long acquisition time when initial scanning or channel switching is carried out.

Secondly, a conventional DVB-T receiver performs elaborate digital processing, such as synchronization (frequency offset restoration and timing offset reconstitution), equalization and FEC (feedforward error correction), in order to determine whether an OFDM signal exists in a given channel. As shown in Figure 2, a frame of a DVB-T signal consists of 68 symbols. Synchronization and equalization are performed on a symbol-by-symbol basis, while FEC is performed frame-by-frame. Generally, one symbol cycle in a DVB-T system (for example, under 8K modes, guard interval 1/4) is 1.120 msec. Therefore, a longer acquisition time is needed when acquiring an OFDM signal.

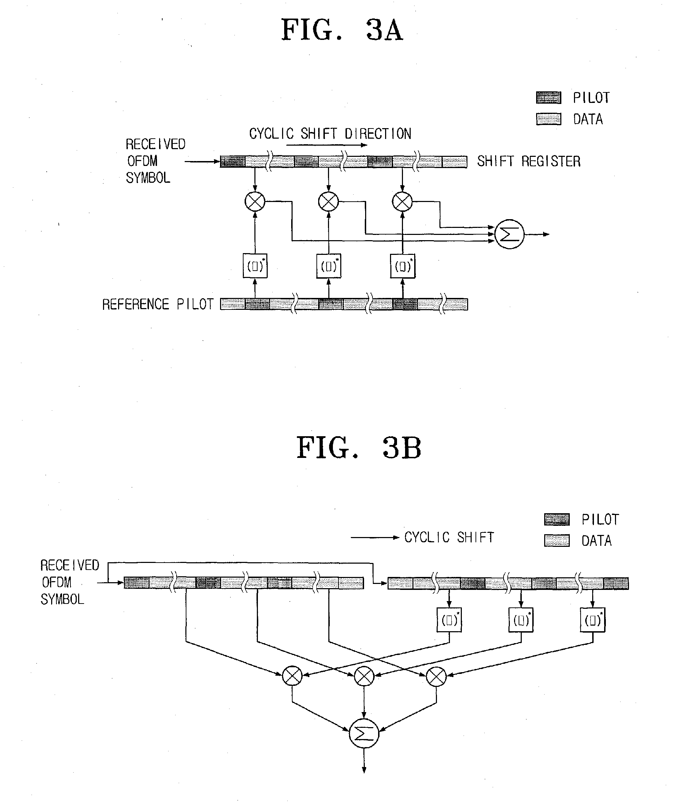

A Nogami algorithm for estimating an integer frequency offset using a single OFDM symbol has been developed, with the aim of reducing the acquisition time of the DVB-T receiver at the initial scanning and channel switching stage. Referring to Figure 3A, the Nogami algorithm estimates an integer frequency offset (m') based on a correlation value between one received OFDM symbol and a reference signal to which the transmitter/receiver has access. The integer frequency offset (m') is represented by the following mathematic formula 1:

[Formula 1]

$$m' = \arg\ \max{}_m\left[\sum_{k=0}^{N-1} X^*{}_{n,k} Y_{n,(m+k)_N}\right]$$

where m is the amount of cyclic shift, * represents the complex conjugate, N is the FFT length, $X_{n,k}$ is a known pilot symbol, and $Y_{n,k}$ is the k-th sub-carrier signal among the n-th OFDM symbol.

However, the Nogami algorithm has a significant disadvantage in that it cannot be used if there is a symbol timing offset. This problem has conventionally been overcome using an alternative algorithm, which estimates an integer frequency offset using two consecutive OFDM symbols. For example, Figure 3B shows a conventional Olivier Dejonghe algorithm in which two received OFDM symbols are stored and shifted. The integer frequency offset (m') is estimated by determining a correlation between consecutive pilots located in the same sub-carrier of each OFDM symbol.

The integer frequency offset (m') obtained by the Olivier Dejonghe algorithm is represented by the following mathematic formula 2:

[Formula 2]

$$m' = \arg \ \max_{|m| \le M} \left| \sum_{k \in P} Y^*_{n,m+k} Y_{n+1,m+k} \right|$$

where $Y_{n,k}$ is the k-th sub-carrier signal of the n-th OFDM symbol, * denotes a complex conjugate, and P represents continual pilots.

The Olivier Dejonghe algorithm is widely used because it is unaffected by symbol timing offsets, as stated above, and fractional frequency offsets. However, the acquisition time of a DVB-T receiver that estimates the integer frequency offset using two OFDM symbols is twice that of a DVB-T receiver that determines the integer frequency offset using a single OFDM symbol. Since two OFDM symbols are received in each retuning step in the AFT process shown in Figure 1, a maximum of 18 OFDM symbols are received if nine retuning steps are executed. Therefore, it may take up to 18×1.120msec = 20.16msec to receive the required number of OFDM symbols.

In addition, when estimating an integer frequency offset based on two symbols, the first symbol of the next frame is sometimes used, as shown in Figure 2. In this case, the FEC process, which corrects errors by a frame unit, discards the remaining symbols of the next frame and performs the error correction using the symbols of the following frame. A maximum of 68 symbols may be discarded, over a time period of up to 68×1.120msec = 76.16msec.

These issues result in a prolonged acquisition time at the initial scanning or channel switching stage when estimating an integer frequency offset using two OFDM symbols, causing inconvenience to a user.

One object of the present invention is to provide an apparatus and a method capable of estimating an integer frequency offset using one symbol in the presence of a symbol timing offset.

An integer frequency offset estimator according to the invention is characterised by the correlation means being arranged to obtain a plurality of correlation values between one received symbol and a plurality of reference signals and the estimating means being configured to determine the integer frequency offset based on the largest one of the plurality of correlation values obtained by the correlation means.

In this manner, an integer frequency offset can be estimated using a single symbol, avoiding the delays discussed above in relation to reception and processing of multiple symbols. The invention may, therefore, result in reduced acquisition times during initial scanning or on changing a channel. The estimation is also resistant to the problems arising fractional frequency offsets and symbol timing offsets associated with prior methods for estimating integer frequency offsets using a single symbol.

The plurality of correlation values may relate to correlations between a scattered pilot of the one received symbol and each one of the plurality of reference signals.

The plurality of reference signals may comprise a plurality of classes of scattered pilots.

The integer frequency offset estimator may include determining means for determining the class of the scattered pilot producing the largest one of the plurality of correlation values and symbol timing offset estimating means for a estimating a symbol timing offset on the basis of the determined scattered pilot class.

The integer frequency offset estimator may be included in a receiver that also comprises means for receiving data comprising a series of symbols, means for transforming the received data from a time domain into a frequency domain and means for compensating for the integer frequency offset determined by said integer frequency offset estimator. The receiver may further include means for estimating and compensating for fractional frequency offsets and symbol timing offsets.

A method for estimating an integer frequency offset in data comprising a series of symbols according to the invention is characterised by the steps of obtaining a plurality of correlation values between one received symbol and each one of a plurality of reference signals and determining an integer frequency offset based on the largest one of the plurality of correlation values.

Embodiments of the present invention will now be described, by way of example, with reference to Figures 4 to 10 of the accompanying drawings, in which:

Figure 1 illustrates an AFT procedure in a known DVB-T receiver;
Figure 2 is a diagram illustrating the frame structure of a prior DVB-T signal;
Figure 3A is a diagram illustrating a known Nogami algorithm, which estimates an integer frequency offset using one OFDM symbol;
Figure 3B is a diagram illustrating a known Olivier Dejonghe algorithm, which estimates an integer frequency offset using two OFDM symbols;

Figure 4 is a schematic block-diagram of a DVB-T receiver with an integer frequency offset estimator according to the present invention;

Figure 5 is a structure-diagram of a DVB-T receiver according to the present invention;

Figure 6 is a detailed block-diagram of an integer frequency offset estimation unit according to the present invention;

Figure 7 illustrates an integer frequency offset estimating algorithm according to the present invention;

Figure 8 is a flowchart of a method for estimating an integer frequency offset according to the present invention;

Figure 9 is a graph showing correlation values of the first to the fourth correlators, produced by a method for estimating an integer frequency offset according to the present invention; and

Figure 10 is a graph comparing the performance of a prior algorithm with an algorithm according to the present invention.

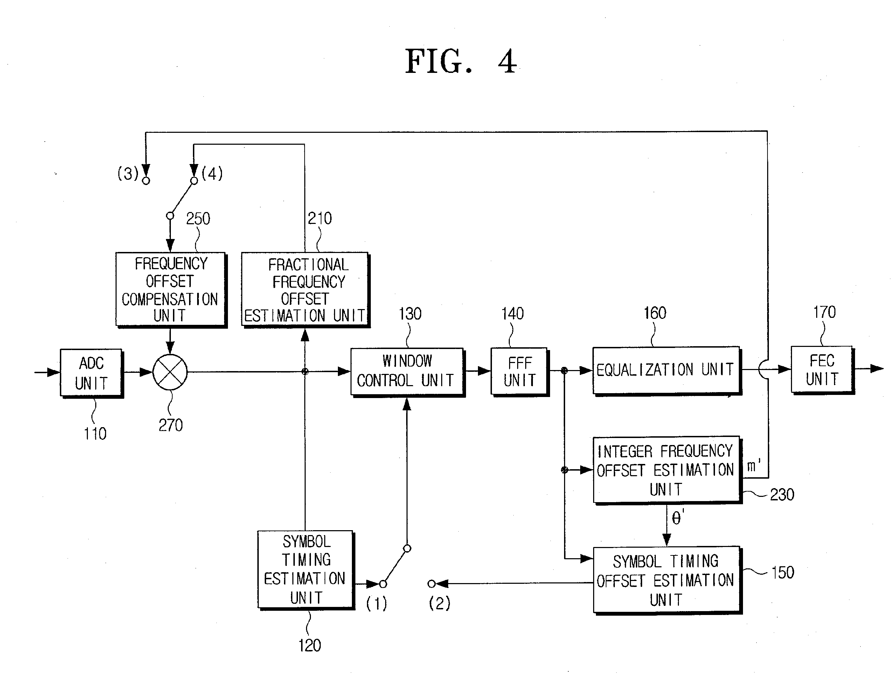

Figure 4 is a schematic block-diagram of a DVB-T receiving system including means for estimating an integer frequency offset using one received OFDM symbol.

The DVB-T receiving system comprises an ADC (Analog to Digital Converter) unit 110, a symbol timing estimation unit 120, a window control unit 130, a FFT (Fast Fourier Transform) unit 140, a fractional frequency offset estimation unit 210, an integer frequency offset estimation unit 230, a frequency offset compensation unit 250, an equalization unit 160, and a FEC (forward error correction) unit 170.

The ADC unit 110 transforms a received analog OFDM signal into a digital signal through sampling, quantization and coding.

The symbol timing estimation unit 120 sets an approximate starting point for a FFT window, by estimating the symbol timing of a received OFDM signal.

The window control unit 130 adjusts the FFT window according to the starting point set by the symbol timing estimation unit 120 (1) and a symbol timing offset estimated in a symbol timing offset estimation unit 150 (2).

The FFT unit 140 transforms a time domain OFDM signal into a frequency domain OFDM signal using the FFT window defined by the window control unit 130.

The symbol timing offset estimation unit 150 estimates a fractional symbol timing offset and an integer symbol timing offset based on the class of a scattered pilot, which is determined by the integer frequency offset estimation unit 230. A phase compensation unit (not shown) provides compensation for a sampling clock frequency offset on the basis of the estimated fractional symbol timing offset. The estimated integer symbol timing offset is inputted to the window control unit 130, which compensates for the symbol timing offset by adjusting the FFT window timing starting point.

The fractional frequency offset estimation unit 210 estimates a frequency offset corresponding to a fractional sub-carrier of the OFDM transformed in digital type.

The frequency offset compensation unit 250 compensates for frequency offsets based on the fractional frequency offset estimated by the fractional frequency offset estimation unit 210 (4) and the integer frequency offset estimated by the integer frequency offset estimation unit 230 (3).

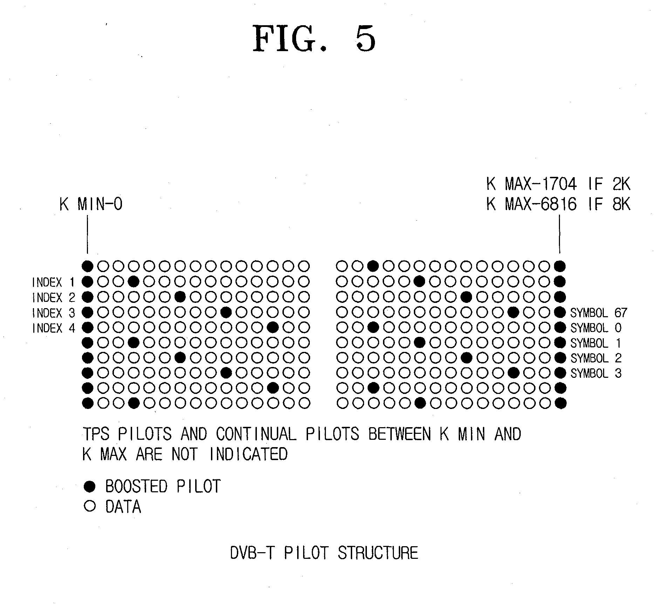

The integer frequency offset estimation unit 230 estimates the integer frequency offset (m') by obtaining correlation values between one received OFDM symbol and each class (Index 1~4) of the scattered pilot shown in Figure 5, and estimates the type (θ') of the scattered pilot of the OFDM symbol. Generally, a DVB-T symbol has 142 and 568 scattered pilots, along with 45 and 177 continual pilots for transmission modes 2K and 8K respectively. As shown in Figure 5, the scattered pilots are arranged at intervals of as much as three sub-carriers with the increment of symbol index, and repeated at a periodicity of 4 symbols. Therefore, the scattered pilot is divided into 4 classes (Index 1~4).

The equalization unit 160 compensates the transformed OFDM signal for distortion generated on a transmission channel.

A FEC unit 170 detects and corrects errors in the OFDM signal.

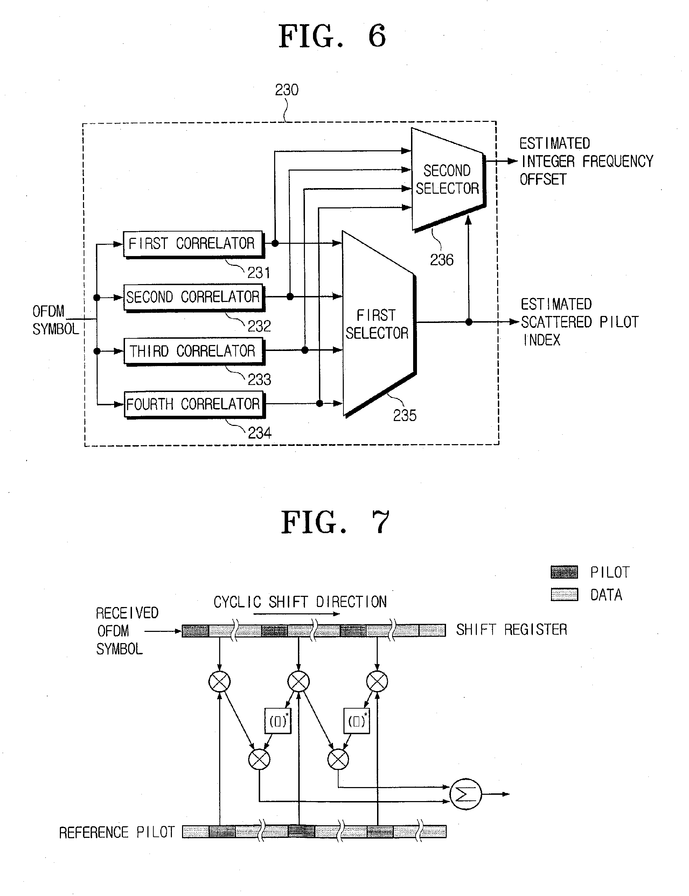

An integer frequency offset estimation apparatus according to an embodiment of the present invention will be described with reference to Figure 6.

The integer frequency offset estimation apparatus 230 comprises a first correlator 231, a second correlator 232, a third correlator 233, a fourth correlator 234, a first selector 235, and a second selector 236.

A scattered pilot corresponding to 'Index 1' among classes 'Index 1~4' of the scattered pilot is extracted by first correlator 231. The first correlator 231 obtains a correlation value with respect to the scattered pilot of class 'Index 1' by shifting the received OFDM symbol periodically.

A scattered pilot of 'Index 2' class is extracted by second correlator 232, which obtains a correlation value with respect to the scattered pilot of class 'Index 2' by shifting the received OFDM symbol periodically.

A scattered pilot of class 'Index 3' is extracted by third correlator 233, which obtains a correlation value with respect to the scattered pilot of class 'Index 3' by shifting the received OFDM symbol periodically.

A scattered pilot of the class 'Index 4' is extracted by fourth correlator 234, which obtains a correlation value with respect to the scattered pilot of class 'Index 4' by shifting the received OFDM symbol periodically.

The first selector 235 detects the largest of the several correlation values obtained by the first to the fourth correlators 231~234, selects the scattered pilot giving rise to the largest correlation value and determines its class.

The second selector 236 estimates an integer frequency offset, using the largest of the correlation values obtained from the first to the fourth correlators 231~234, i.e., using the correlation value which corresponds to the class of the selected scattered pilot determined by the first selector 235.

The class of the selected scattered pilot is inputted to the symbol timing offset estimation unit 150, for use in estimating a symbol timing offset. Meanwhile, the integer frequency offset, estimated by the second selector 236, is inputted to the frequency offset compensation unit 250 and used as the basis for integer frequency offset (3) compensation.

Figure 7 is a detailed configuration diagram of the correlators 231~234 in the integer frequency offset estimation apparatus of Figure 6. A correlation algorithm for generating correlation values in this particular embodiment of the present invention is represented by the following mathematic formula 3:

[Formula 3]

$$\wedge(m,\theta) = \left| \sum_{k \in P_\theta, k \neq k_{\max_p}} (Y_{n,m+k} X_{n,k})^* (Y_{n,m+k+\Delta} X_{n,k+\Delta}) \right|$$

where $P_\theta$ is a location of a scattered pilot, $k_{\max_p}$ is the last sub-carrier index of a scattered pilot in one OFDM symbol, and $\Delta$ is an interval between adjacent scattered pilots.

The following is a detailed explanation of Formula 3 with reference to the following mathematical formulae:

Firstly, an output from the FFT unit 140, i.e., the p-th sub-carrier ($Y_{n,p}$) of the n-th OFDM symbol, is represented by the following mathematic formula 4:

[Formula 4]

$$Y_{n,p} = \frac{1}{N} \frac{\sin \pi\varepsilon}{\sin(\pi\varepsilon/N)} H_{n,p+m} X_{n,p+m} e^{\psi_{n,p}} + I_{n,p} + N_{n,p}$$

where $H_{n,P+m}$ is a channel response, $I_{n,P}$ is ICI (Intercarrier interference), $N_{n,p}$ is AWGN (Additive White Gaussian Noise) in the frequency domain and $\psi_{n,p}$ characterizes the rotation of $Y_{n,p}$. $\psi_{n,p}$ is represented by the following mathematic formula 5:

[Formula 5]

$$\psi_{n,p} = \frac{2\pi(p+m)\tau}{N} \cdots\cdots\cdots (1)$$

$$+ \frac{2\pi(m+\varepsilon)n(N+N_G)}{N} \cdots\cdots (2)$$

$$+ \frac{\pi\varepsilon(2\tau+N-1)}{N} \cdots\cdots\cdots\cdots (3)$$

where $\varepsilon$ is a fractional frequency offset, $\tau$ is a symbol timing offset, and $N_G$ is the size of the guard interval.

With reference to formula 5, a term (1) is proportional to the multiplication of sub-carrier index and symbol timing offset. A term (2) is proportional to a frequency offset, and a term (3), given by the symbol timing offset and the frequency offset, is a phase shift value of all sub-carriers in a symbol.

A predicted correlation value (E) between two adjacent scattered pilots in one OFDM symbol as represented by formula 4 can be generated using the following mathematic formula 6:

[Formula 6]

$$Let \ \ H_{n,p+m} \cong \alpha_1 e^{j\theta 1},$$

$$H_{n,p+\Delta+m} \cong \alpha_2 e^{j\theta 2},$$

$$\left[\frac{1}{N}\frac{\sin \pi \varepsilon}{\sin(\pi \varepsilon / N)}\right]^2 \cong \alpha_3, \ \ then$$

$$E\left[(Y_{n,p}X_{n,p})^*(Y_{n,p+\Delta}X_{n,p+\Delta})\right]$$

$$= E\left[\alpha_1\alpha_2\alpha_3(X_{n,p+m}X_{n,p})^*(X_{n,p+\Delta+m}X_{n,p+\Delta})e^{j(\frac{2\pi\tau\Delta}{N}+\theta 1-\theta 2)}\right] + \sigma_n^2$$

where $\Delta$ is the interval between adjacent scattered pilots in one OFDM symbol, $\tau$ is a symbol timing offset, m is an integer frequency offset caused from shifting of the symbol during the correlation and $\sigma_n^2$ is the variance of the additive white gaussian noise.

Comparing a phase component

$$e^{j(\frac{2\pi\tau\Delta}{N}+\theta 1+\theta 2)}$$

of Formula 6 with that of Formula 5, it can be seen that a CPE (Common Phase Error) corresponding to the term (3) of the Formula 5 and an index p of a sub-carrier corresponding to the term (1) of the Formula 5 are eliminated. As a result, the effect of the CPE and the symbol timing offset ($\tau$) is reduced to a minimum.

To minimize the effect of AWGN, a distorted phase response ($\theta 1 - \theta 2$) and an ICI, the correlation value between two adjacent scattered pilots, is expanded into a correlation value for one symbol. The correlation value for one symbol is calculated using Formula 3.

The scattered pilot class ($\theta'$), estimated by the first selector 235 of the integer frequency offset estimation unit 230 using the correlation algorithm defined in the Formula 3, is represented by the following mathematical formula:

[Formula 7]

$$\theta' = \arg \max_\theta [\Lambda(m,\theta)]$$

An integer frequency offset (m') estimated in the second selector 236 is represented by the following mathematic formula:

[Formula 8]

$$m' = \arg \max_m [\Lambda(m,\theta')]$$

Hence, both the scattered pilot class and the integer frequency offset are estimated by the integer frequency offset estimation unit 230.

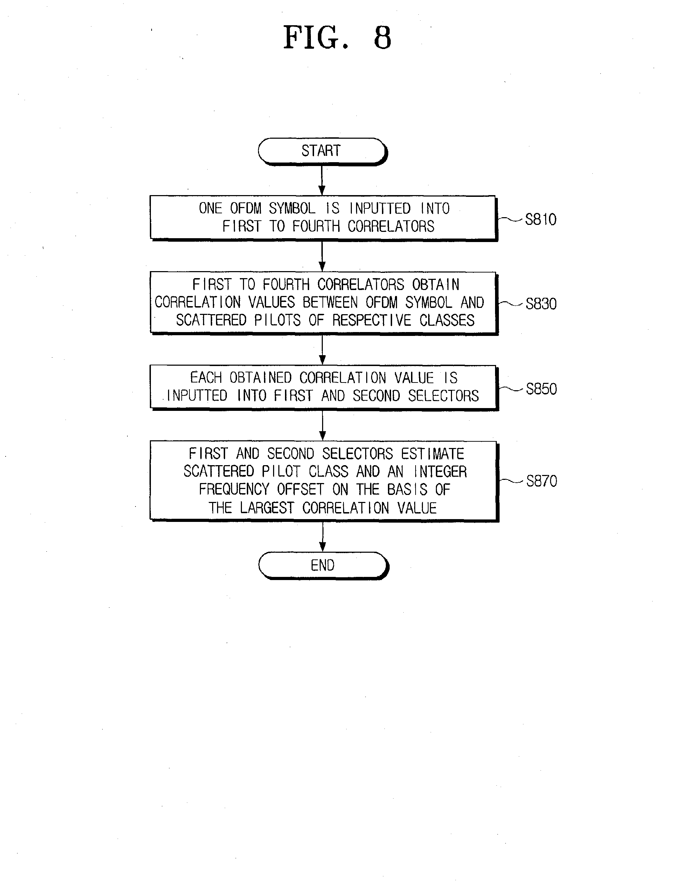

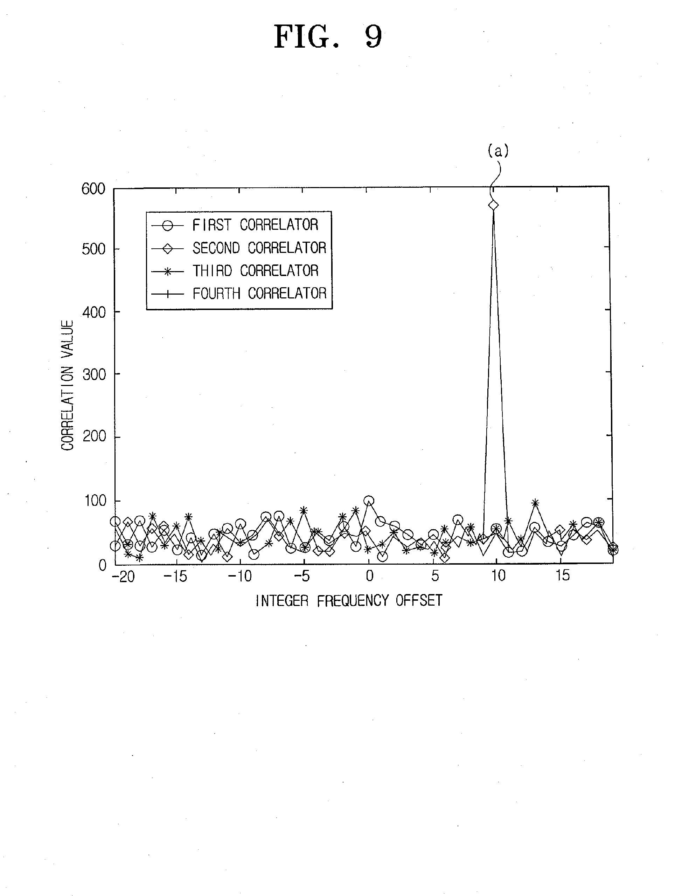

Figure 8 is a flowchart showing the estimation of an integer frequency offset in this embodiment and Figure 9 is an example graph showing how an integer frequency offset is estimated by the integer frequency offset estimation apparatus when SNR=5dB, m=10, $\varepsilon$=0.2, and $\tau$=10.

One OFDM symbol, output from FFT unit 140, is inputted to the integer frequency offset estimation unit 230.

The one OFDM symbol is inputted into the first to the fourth correlators 231 to 234 (S810).

Each of the first to the fourth correlators 231 to 234 obtains a correlation value between different classes of scattered pilots and the input OFDM symbol (S830). In short, each correlator obtains a correlation value corresponding to the class of each scattered pilot using the correlation algorithm of Formula 3.

Each correlation value calculated in the first to fourth correlators 231 to 234 is inputted to the first and second selectors 235, 236 (S850). In the first selector 235, a scattered pilot class, corresponding to the largest correlation value, is estimated. In the second selector 236, an integer frequency offset is estimated using the largest correlation value (S870).

In the example shown in Figure 9, the first selector 235 recognizes that the correlator that has output the largest one (a) of the calculated correlation values is the second correlator 232 and determines that this value (a) was the result of a correlation with a scattered pilot of class 'Index 2'. On this basis, the second selector 236 regards the largest correlation value (a), '10', as an integer frequency offset normalized to a sub-carrier interval.

As described above, the estimated integer frequency offset (m') is inputted to the frequency offset compensation unit 250 and the estimated scattered-pilot class ($\theta'$) is inputted to the symbol timing offset compensation unit 150 for use in estimating a symbol timing offset.

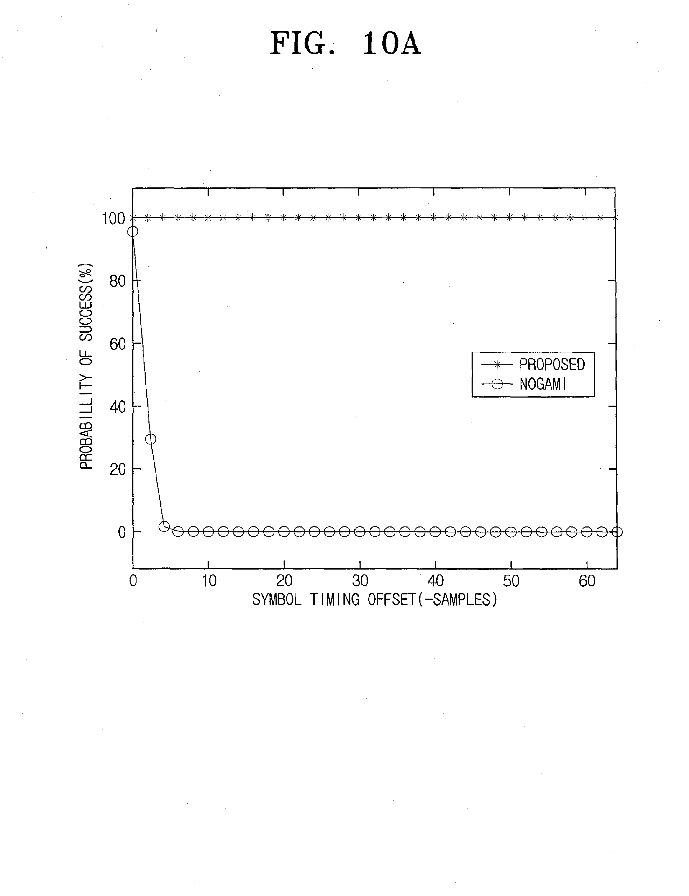

Figure 10A is a graph comparing the probability of successful estimation of the integer frequency offset using the present method, with the correlation algorithm of Mathematical Formula 3, and the prior Nogami algorithm, under conditions SNR=5dB, m=10, and $\varepsilon$=0. The probability of a successful estimation using the Nogami algorithm is very low where there is a symbol timing offset, while the probability of success using the present integer frequency offset estimation method is 100%

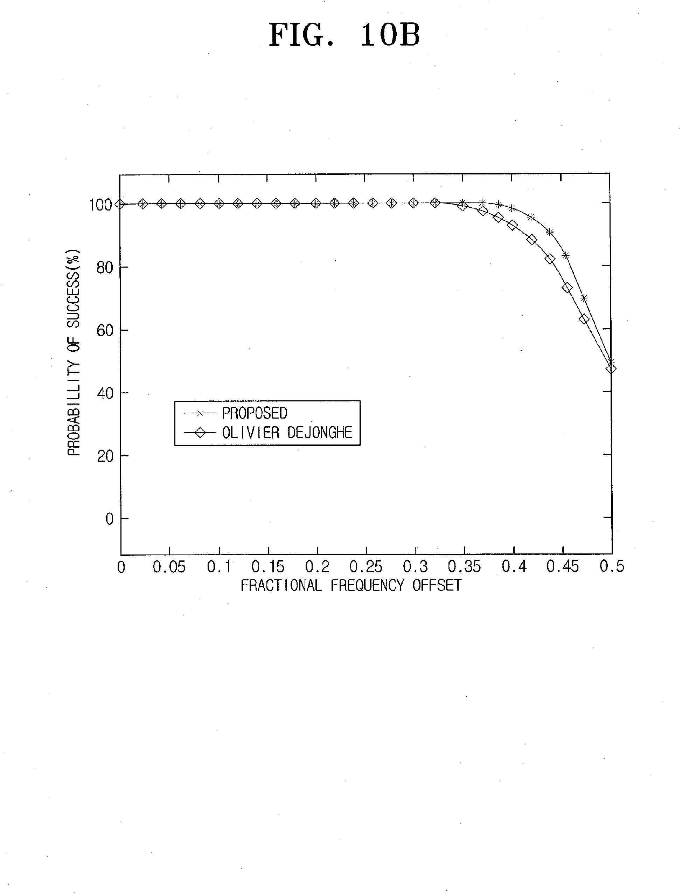

Figure 10B is a graph comparing the probability of success using the present method, which is based on one OFDM signal, with the prior Olivier Dejonghe algorithm, which requires two symbols, under conditions SNR=5dB, m=10, $\varepsilon$=0. The probability of success using the present method is superior to that of the Olivier Dejonghe algorithm.

Therefore, an integer frequency offset can be estimated using one received OFDM symbol in a manner that is robust to fractional frequency offsets and symbol timing offsets. Furthermore, since the classes of scattered pilots in a received OFDM symbol can be determined, there is no need to provide a separate apparatus for this specific purpose.

While the present invention has been shown and described with reference to certain embodiments thereof, it is noted that the present invention is not limited to the embodiments described above and it is apparent that variations and modifications can be made by those skilled in the art within the scope of the present invention defined in the appended claims.

## Claims

1. An integer frequency offset estimator (230) comprising:

    correlation means (231 to 234) configured to obtain a correlation value between one received symbol and a reference signal; and
    estimating means (236) for determining an integer frequency offset using said correlation value;

    **characterised in that:**

    the correlation means (231 to 234) is arranged to obtain a plurality of correlation values between one received symbol and a plurality of reference signals; and
    said estimating means is configured to determine the integer frequency offset based on the largest one (a) of the plurality of correlation values obtained by the correlation means.

**2.** An integer frequency offset estimator (230) according to claim 1, wherein the correlation means (231 to 234) obtain correlation values between a scattered pilot of the one received symbol and the plurality of reference signals.

**3.** An integer frequency offset estimator (230) according to claim 1 or 2, wherein the plurality of reference signals comprise a plurality of classes of scattered pilots.

**4.** An integer frequency offset estimator (230) according to claim 3, comprising:

determining means (235) for determining the class of the scattered pilot producing the largest one (a) of the plurality of correlation values; and
symbol timing offset estimating means (150) for a estimating a symbol timing offset on the basis of the determined scattered pilot class.

**5.** A receiver comprising:

means for receiving data comprising a series of symbols;
means (140) for transforming the received data from a time domain into a frequency domain;
an integer frequency offset estimator (230) according to any one of the preceding claims; and
means for compensating for the integer frequency offset (250) determined by said integer frequency offset estimator.

**6.** A method for estimating an integer frequency offset in data comprising a series of symbols, comprising:

obtaining a plurality of correlation values between one received symbol and each one of a plurality of reference signals;
determining an integer frequency offset based on the largest one (a) of the plurality of correlation values.

**7.** A receiving system comprising:

a FFT (Fast Fourier Transform) unit for transforming OFDM signal in a time domain into a OFDM symbol in a frequency domain;
an integer frequency offset estimation unit for obtaining correlation values between a scattered pilot of one received OFDM symbol and a plurality of classes of scattered pilots of a reference signal, and estimating an integer frequency offset and
the class of the scattered pilot on the basis of the largest correlation value;
a frequency offset compensation unit for compensating a frequency offset on the basis of the estimated integer frequency offset; and
a symbol timing offset estimation unit for estimating a symbol timing offset on the basis of the estimated scattered pilot class.

**8.** The receiving system according to claim 7, wherein the correlation value of the integer frequency offset estimation unit is represented by the following formula:

$$\wedge(m,\theta) = \left| \sum_{k \in P_\theta, k \neq k_{\max_p}} (Y_{n,m+k} X_{n,k})^* (Y_{n,m+k+\Delta} X_{n,k+\Delta}) \right|$$

where m is the amount of cyclic shift, * is a complex conjugate, $X_{n,k}$ is a known scattered pilot, $Y_{n,k}$ is the k-th sub-carrier signal among the n-th OFDM symbol, $P_\theta$ is a location of the scattered pilot, $k_{\max_p}$ is the last sub-carrier index of the scattered pilot within one OFDM symbol, and $\Delta$ is an interval between two adjacent scattered pilots.

**9.** The receiving system according to claim 7, wherein the scattered pilot class ($\theta'$) estimated in the integer frequency offset estimation unit is represented by the following formula:

$$\theta' = \arg\max_\theta[\Lambda(m,\theta)]$$

**10.** The receiving system according to claim 9, wherein the integer frequency offset (m') estimated in the integer frequency offset estimation unit is represented by the following formula:

$$m' = \arg\max_m[\Lambda(m,\theta')]$$

**11.** An integer frequency offset estimator comprising:

a plurality of correlators for obtaining correlation values between a scattered pilot of one received OFDM symbol and a plurality of classes of scattered pilots of a reference signal;
a first selector for estimating a scattered pilot class corresponding to the largest one among the correlation values obtained at the plurality of correlators; and
a second selector for estimating the largest one among the plurality of correlation values obtained at the plurality of correlators on the basis of the estimated class of the scattered pilot as an integer frequency offset.

**12.** The integer frequency offset estimator according to claim 11, wherein the correlation value given by the above correlator is represented by the following formula:

$$\wedge(m,\theta) = \left| \sum_{k\in P_\theta, k\neq k_{\max_p}} (Y_{n,m+k} X_{n,k})^* (Y_{n,m+k+\Delta} X_{n,k+\Delta}) \right|$$

where m is the amount of cyclic shift, * is a complex conjugate, $X_{n,k}$ is a known scattered pilot, $Y_{n,k}$ is the k-th sub-carrier signal among the n-th OFDM symbol, $P_\theta$ is a location of the scattered pilot, $k_{\max_p}$ is the last sub-carrier index of the scattered pilot within one OFDM symbol, and $\Delta$ is an interval between two adjacent scattered pilots.

**13.** The integer frequency offset estimator according to claim 11, wherein the scattered pilot class (θ') estimated by the first selector is represented by the following formula:

$$\theta' = \arg\max_\theta[\Lambda(m,\theta)]$$

**14.** The integer frequency offset estimator according to claim 13, wherein the integer frequency offset (m') estimated by the second selector is represented by the following formula:

$$m' = \arg\max_m[\Lambda(m,\theta')]$$

**15.** A method for estimating integer frequency offset comprising the steps of:

obtaining a plurality of correlation values by applying a plurality of reference signals with respect to one received OFDM symbol;
estimating a reference signal, which corresponds to the largest one among the plurality of correlation values, to be a class of the scattered pilot of the one received OFDM symbol; and
estimating an integer frequency offset by using one among the plurality of correlation values that corresponds to the estimated class of the scattered pilot.

**16.** The method for estimating integer frequency offset according to claim 15, wherein the correlation value is represented by the following formula:

$$\wedge(m,\theta) = \left| \sum_{k\in P_\theta, k\neq k_{\max_p}} (Y_{n,m+k} X_{n,k})^* (Y_{n,m+k+\Delta} X_{n,k+\Delta}) \right|$$

where m is the amount of cyclic shift, * is a complex conjugate, $X_{n,k}$ is a known scattered pilot, $Y_{n,k}$ is the k-th sub-carrier signal among the n-th OFDM symbol, $P_\theta$ is a location of the scattered pilot, $k_{\text{max}_p}$ is the last sub-carrier index of the scattered pilot within one OFDM symbol, and $\Delta$ is an interval between two adjacent scattered pilots.

**17.** The method for estimating integer frequency offset according to claim 15, wherein the scattered pilot class ($\theta'$) estimated in the above is represented by the following formula:

$$\theta' = \arg \max_\theta [\Lambda(m,\theta)]$$

**18.** The method for estimating integer frequency offset according to claim 17, wherein the integer frequency offset (m') is represented by the following formula:

$$m' = \arg \max_m [\Lambda(m,\theta')]$$

# FIG. 1

PUBLISHED
CENTER
FREQUENCY
LOCATED SIGNAL

1 MHZ SHIFTED SIGNAL

1 MHZ

FREQUENCY

1 2 3 4 5 6 7 8 9

TUNING POINT,
STEP SIZE = APPROX, 300 KHZ

RF OSCILLATOR VCXO
VOLTAGE INCREMENT

# FIG. 2

SYMBOL INDEX 0

SYMBOL INDEX 67
SYMBOL INDEX 0

SYMBOL INDEX 67
SYMBOL INDEX 0

SYMBOL INDEX 67

OFDM FRAME 0

OFDM FRAME 1

OFDM FRAME 2

CARRIER
TIMING
RECOVERY
AND EQUALIZATION
PERIOD

ABANDONED
FRAME

FEC
DECODING
PERIOD

# FIG. 3A

PILOT
DATA

CYCLIC SHIFT DIRECTION

RECEIVED
OFDM
SYMBOL

SHIFT REGISTER

$(\square)^*$    $(\square)^*$    $(\square)^*$

REFERENCE PILOT

# FIG. 3B

CYCLIC SHIFT

PILOT
DATA

RECEIVED
OFDM
SYMBOL

$(\square)^*$    $(\square)^*$    $(\square)^*$

FIG. 4

# FIG. 5

K MIN-0

K MAX-1704 IF 2K
K MAX-6816 IF 8K

INDEX 1
INDEX 2
INDEX 3
INDEX 4

SYMBOL 67
SYMBOL 0
SYMBOL 1
SYMBOL 2
SYMBOL 3

TPS PILOTS AND CONTINUAL PILOTS BETWEEN K MIN AND
K MAX ARE NOT INDICATED

● BOOSTED PILOT
○ DATA

DVB-T PILOT STRUCTURE

# FIG. 6

230

# FIG. 7

# FIG. 8

```
        ┌──────────────┐
        │    START     │
        └──────────────┘
               │
               ▼
┌─────────────────────────────────┐
│  ONE OFDM SYMBOL IS INPUTTED INTO│──── S810
│    FIRST TO FOURTH CORRELATORS   │
└─────────────────────────────────┘
               │
               ▼
┌─────────────────────────────────┐
│  FIRST TO FOURTH CORRELATORS OBTAIN│
│ CORRELATION VALUES BETWEEN OFDM SYMBOL AND │──── S830
│  SCATTERED PILOTS OF RESPECTIVE CLASSES │
└─────────────────────────────────┘
               │
               ▼
┌─────────────────────────────────┐
│   EACH OBTAINED CORRELATION VALUE IS│──── S850
│ INPUTTED INTO FIRST AND SECOND SELECTORS │
└─────────────────────────────────┘
               │
               ▼
┌─────────────────────────────────┐
│  FIRST AND SECOND SELECTORS ESTIMATE│
│  SCATTERED PILOT CLASS AND AN INTEGER │──── S870
│    FREQUENCY OFFSET ON THE BASIS OF │
│    THE LARGEST CORRELATION VALUE   │
└─────────────────────────────────┘
               │
               ▼
        ┌──────────────┐
        │     END      │
        └──────────────┘
```

# FIG. 9

# FIG. 10A

# FIG. 10B